(19) Europäisches Patentamt
European Patent Office
Office européen des brevets

(11) EP 0 787 771 A1

(12) # DEMANDE DE BREVET EUROPEEN

(43) Date de publication:
**06.08.1997 Bulletin 1997/32**

(51) Int Cl.$^6$: **C08L 77/00**, C08L 77/02, C08L 77/06

(21) Numéro de dépôt: **97400085.3**

(22) Date de dépôt: **16.01.1997**

(84) Etats contractants désignés:
**AT BE CH DE DK ES FI FR GB GR IE IT LI LU NL PT SE**

(30) Priorité: **31.01.1996 FR 9601144**

(71) Demandeur: **ELF ATOCHEM S.A.**
**92800 Puteaux (FR)**

(72) Inventeurs:
- **Bouilloux, Alain**
**27300 Bernay (FR)**
- **Fernagut, François**
**27300 Menneval (FR)**

(74) Mandataire: **Neel, Henry et al**
**Elf Atochem S.A.,**
**Dept. Propriété Industrielle,**
**La Défense 10,**
**Cedex 42**
**92091 Paris La Défense (FR)**

(54) **Compositions à base de polyamides et de polyolefines très souples en flexion**

(57) L'invention concerne des compositions comprenant :

- au moins un polyamide (A) ;
- au moins un polymère (B) comprenant des blocs polyamide et des blocs polyéther
- au moins une polyoléfine (C) ;
- au moins une polyoléfine fonctionnalisée (D)

et telles que le module de flexion selon ISO 178-93 soit 0,05 à 0,3 fois le module de flexion du polyamide (A).

En particulier, on peut obtenir des polyamides ayant un module de flexion entre 170 et 350 MPa.

EP 0 787 771 A1

## Description

La présente invention concerne des compositions à base de polyamides et de polyoléfines très souples en flexion et plus particulièrement des compositions comprenant :

- au moins un polyamide (A)
- au moins un polymère (B) comprenant des blocs polyamides et des blocs polyéther
- au moins une polyoléfine (C)
- au moins une polyoléfine fonctionnalisée (D)

et telles que la décroissance du module dynamique en traction en fonction de la température (DMA) est plus faible que celle de compositions ayant un module de flexion à température ambiante du même ordre de grandeur qui sont à base des polymères (A), (C) et (D) et ne comportent pas (B).

L'invention est particulièrement utile pour des compositions dont le module de flexion selon ISO 178-93 est environ 0,05 à 0,3 fois le module du polyamide (A).

A titre d'exemple, le module de flexion peut être compris entre 150 et 750 MPa. Les compositions de l'invention peuvent être aussi caractérisées par une structure à matrice polyamide, c'est-à-dire qu'elles conservent l'essentiel des propriétés des polyamides, aussi bien les propriétés mécaniques que l'aspect (brillance).

L'art antérieur a déjà décrit des polyamides souples soit par incorporation de plastifiant dans le polyamide, soit par mélange avec des polyoléfines. Cependant, pour obtenir de faibles modules de flexion, il est nécessaire d'incorporer d'importantes quantités de plastifiant ou de polyoléfines ce qui entraîne soit l'exsudation du plastifiant et donc une perte de la souplesse, soit la perte de la matrice polyamide ou des mélanges qui n'ont plus de propriétés mécaniques ou qui sont difficilement transformables.

L'art antérieur a aussi décrit des mélanges à base de polymères comprenant des blocs polyamides et des blocs polyéther, cependant ils sont beaucoup trop élastomériques et n'ont plus les propriétés du polyamide.

Les polyamides souples de l'invention ont de nombreux avantages. La HDT (heat deflection temperature ou température de déformation sous charge) est plus élevée que celle des produits de l'art antérieur de même souplesse. La brillance est proche de celle du polyamide, la dureté ne décroît pas avec le module de flexion.

La reprise en eau est plus faible que les polyamides souples de l'art antérieur.

La résistance aux chocs est très bonne ainsi que la tenue thermique. Ils présentent aussi une reprise élastique et une faible déformation remanente à la compression (DRC).

CH 655 941 décrit la nécessité d'ajouter des copolyoléfines greffées par de l'anhydride maléique à des copolymères à blocs polyamides ou à des mélanges de ces copolymères à blocs polyamide avec des polyamides pour les assouplir. Ces compositions de l'art antérieur ne sont pas à matrice polyamide et ne comprennent pas de polyoléfine (C).

US 5 070 145 décrit des mélanges de polyamide, de copolymères éthylène / acrylate d'alkyle et de copolymère éthylène / acrylate d'alkyle / anhydride maléique.

On améliore ainsi la résistance au choc des polyamides, toutefois ces compositions ne comprennent pas de copolymères à blocs polyamide et n'ont pas la souplesse des compositions de l'invention.

EP 564 338 décrit des mélanges de polyamide et de copolymères éthylène / acrylate d'alkyle / méthacrylate de glycidyle et éventuellement de copolymère éthylène / acrylate d'alkyle / anhydride maléique.

La partie non polyamide de ces mélanges peut donc être réticulée, ce qui permet d'augmenter sa quantité par rapport au polyamide et de baisser le module de flexion. L'ajout de copolymère à blocs polyamide n'est pas décrit. L'utilisation de deux copolymères réactifs entre eux nécessite des précautions.

On entend par polyamide (A) les produits de condensation :

- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;

ou des mélanges de certains de ces monomères ce qui conduit à des copolyamides, par exemple le PA-6/12 par condensation du caprolactame et du lauryllactame.

On peut utiliser des mélanges de polyamide. On utilise avantageusement le PA-6 et le PA-6,6.

Les polymères à blocs polyamides et blocs polyéthers résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes dicarboxyliques.

2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.

3) Séquences polyamides à bouts de chaînes dicarboxyliques avec des polyétherdiols, les produits obtenus étant, dans ce cas particulier, des polyétheresteramides.

Les séquences polyamides à bouts de chaînes dicarboxyliques proviennent, par exemple, de la condensation d'acides alpha-oméga aminocarboxyliques de lactames ou de diacides carboxyliques et diamines en présence d'un diacide carboxylique limiteur de chaîne. Avantageusement, les blocs polyamides sont en polyamide-12.

La masse molaire en nombre $\overline{M_n}$ des séquences polyamides est comprise entre 300 et 15 000 et de préférence entre 600 et 5 000. La masse $\overline{M_n}$ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité intrinsèque entre 0,8 et 2,5 mesurée dans le métacrésol à 25° C.

Que les blocs polyéthers dérivent du polyéthylène glycol, du polyoxypropylène glycol ou du polyoxytetraméthylène glycol, ils sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

Que les blocs polyéther soient introduits dans la chaîne du polymère à blocs polyamides et blocs polyéther sous forme de diols ou de diamines, on les appelle par simplification blocs PEG ou blocs PPG ou encore blocs PTMG.

On ne sortirait pas du cadre de l'invention si les blocs polyéther contenaient des motifs différents tels que des motifs dérivés de l'éthylène glycol ($-OC_2H_4-$),

du propylène glycol 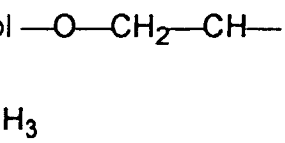

ou encore du tétraméthylène glycol ($-O-CH_2)_4-$).

De préférence, les blocs polyamide comprennent les mêmes motifs que le polyamide (A).

De préférence, le polymère à blocs polyamides et blocs polyéther comprend un seul type de bloc polyamide et un seul type de blocs polyéther. On utilise avantageusement des polymères à blocs PA-6 et blocs PTMG.

On peut aussi utiliser un mélange de deux polymères à blocs polyamides et blocs polyéther.

Avantageusement, le polymère à blocs polyamides et blocs polyéthers est tel que le polyamide est le constituant majoritaire en poids, c'est-à-dire que la quantité de polyamide qui est sous forme de blocs et celle qui est éventuellement répartie de façon statistique dans la chaîne représente 50 % en poids ou plus du polymère à blocs polyamide et blocs polyéther. Avantageusement, la quantité de polyamide et la quantité de polyéther sont dans le rapport (polyamide/polyéther) 50/50 à 80/20.

De préférence, les blocs polyamides et les blocs polyéther d'un même polymère (B) ont respectivement des masses Mn 1000/1000, 1300/650, 2000/1000, 2 600/650 et 4 000/1 000.

La polyoléfine (C) est un polymère comprenant des motifs oléfines tels que par exemple des motifs éthylène,

propylène, butène-1, ou tout autre alpha oléfine. A titre d'exemple, on peut citer :

- les polyéthylènes tels que les LDPE, HDPE, LLDPE ou VLDPE, le polypropylène, les copolymères éthylène / propylène, les EPR (éthylène / propylène Rubber) ou encore les PE métallocènes,
- les copolymères blocs styrène / éthylène-butène / styrène (SEBS), les copolymères blocs styrène / butadiène / styrène (SBS), les copolymères blocs styrène / isoprène / styrène (SIS), les copolymères blocs styrène / éthylènepropylène / styrène, les éthylène / propylène / diène (EPDM) ;
- les copolymères de l'éthylène avec au moins un produit choisi parmi les sels ou les esters d'acides carboxyliques insaturés, ou les esters vinyliques d'acides carboxyliques saturés.

Avantageusement, la polyoléfine (C) est choisie parmi le LLDPE, le VLDPE, le polypropylène, les copolymères éthylène / acétate de vinyle ou les copolymères éthylène / (méth)acrylate d'alkyle. La densité peut être avantageusement comprise entre 0,86 et 0,965, le Melt Flow index (MFI) peut être compris entre 0,3 et 40.

La polyoléfine fonctionnalisée (D) est un polymère comprenant des motifs alpha oléfine et des motifs epoxyde ou acide carboxylique ou anhydride d'acide carboxylique.

A titre d'exemple, on peut citer les polyoléfines (C) précédentes greffées par des epoxydes insaturés tels que le (méth)acrylate de glycidyle, ou par des acides carboxyliques tels que l'acide (méth)acrylique ou encore par des anhydrides d'acides carboxyliques insaturés tels que l'anhydride maléique.

On peut encore citer :

- les copolymères de l'éthylène, d'un epoxyde insaturé et éventuellement d'un ester ou un sel d'acide carboxylique insaturé ou d'un ester vinylique d'acide carboxylique saturé. Ce sont par exemple les copolymères éthylène / acétate de vinyle / (méth)acrylate de glycidyle ou les copolymères éthylène / (méth)acrylate d'alkyle / (méth)acrylate de glycidyle.
- les copolymères de l'éthylène d'un anhydride d'acide carboxylique insaturé et/ou d'un acide carboxylique insaturé pouvant être partiellement neutralisé par un métal (Zn) ou un alcalin (Li) et éventuellement d'un ester d'acide carboxylique insaturé ou d'un ester vinylique d'acide carboxylique saturé. Ce sont par exemple les copolymères éthylène / acétate de vinyle / anhydride maléique ou les copolymères éthylène / (méth)acrylate d'alkyle / anhydride maléique ou encore les copolymères éthylène / (méth)acrylate de Zn ou Li/anhydride maléique.
- le polyéthylène, le polypropylène, les copolymères éthylène propylène greffés ou copolymérisés avec un anhydride d'acide carboxylique insaturé puis condensés avec un polyamide (ou un oligomère de polyamide) monoaminé. Ces produits sont décrits dans EP 342 066.

Avantageusement, la polyoléfine fonctionnalisée (D) est choisie parmi les copolymères éthylène / (méth)acrylate d'alkyle / anhydride maléique, les copolymères éthylène / acétate de vinyle / anhydride maléique, les copolymères éthylène propylène majoritaires en propylène greffés par de l'anhydride maléique puis condensés avec du polyamide 6 monoaminé ou des oligomères monoaminés de caprolactame.

De préférence, (D) est un copolymère éthylène / (méth)acrylate d'alkyle / anhydride maléique comprenant jusqu'à 40 % en poids de (méth)acrylate d'alkyle et jusqu'à 10 % en poids d'anhydride maléique.

Le (méth)acrylate d'alkyle peut être choisi parmi l'acrylate de méthyle, l'acrylate d'éthyle, l'acrylate de n-butyle, l'acrylate d'isobutyle, l'acrylate d'éthyl-2-hexyle, l'acrylate de cyclohexyle, le méthacrylate de méthyle et le méthacrylate d'éthyle.

La demanderesse a découvert que la décroissance du module dynamique en traction était plus faible que pour les compositions ne contenant pas le polymère (B) et ayant un module de flexion à température ambiante qui est du même ordre de grandeur ; c'est-à-dire qu'on se compare avec des compositions beaucoup plus riches en polymères (C) et (D) pour obtenir une bonne souplesse.

On entend par "même ordre de grandeur" des valeurs de module de flexion indentiques ou qui ne diffèrent pas de plus de 100 ou 200 MPa.

Par exemple, on peut comparer des compositions selon l'invention de module 200 ou 250 avec des compositions de module 300 à 400 et ne comportant pas (B).

Par contre, si on compare, selon cette DMA, des compositions ayant des modules de flexion à température ambiante ayant des différences de 400 à 500 alors la propriété peut n'être pas systématiquement vérifiée.

Cette plus faible décroissance signifie des rapports de pente, qui en plus peuvent varier dans la plage de température, par exemple entre 1,1 et 1,5.

Selon la nature du polymère (B), par exemple si il est trop riche en blocs polyéther, cette propriété n'est plus vraie au-delà de 160 ou 190° C.

Avantageusement, les proportions en poids des différents constituants sont:

$50\ \% \leq A + B \leq 80\ \%$ et $20\ \% \leq C + D \leq 50\ \%$, le total étant 100 %.

Selon une autre forme de l'invention, les proportions de A + B sont telles que

$0,06 \leq A / B \leq 15$ et de préférence $0,5 \leq A/B \leq 12$.

En augmentant la quantité de (B), on baisse le module de flexion.

La quantité de (D) dépend du nombre de fonctions qu'il porte et de leur réactivité.

Si (D)porte peu de fonctions, il en faut une quantité plus importante.

S'agissant de copolymères ayant de 1 à 10 % en poids d'anhydride maléique de méthacrylate de glycidyle ou d'acide (méth)acrylique D peut être tel que

$0,1 \leq D/C \leq 0,5$.

Des compositions particulièrement préférées pour leur module de flexion sont telles que :

$55\ \% \leq A + B \leq 65\ \%$ $35\ \% \leq C + D \leq 45\ \%$ le total étant 100 %

$0,5 \leq A/B \leq 5$

$0,2 \leq D/C \leq 0,3$

(A) étant le PA6 ou le PA-6,6

(B) étant un copolymère à blocs PA-6 et blocs PTMG

(C) un VLDPE

(D) un copolymère éthylène / (méth)acrylate d'alkyle / anhydride maléique

Ces compositions de l'invention peuvent aussi comprendre des charges, des ignifugeants, des agents glissants ou antiblocants, des anti oxydants, des anti U.V..

Elles sont utiles pour faire des objets moulés, extrudés, soufflés tels que des films, des tubes, des plaques ou des pièces de formes diverses.

On prépare ces compositions par mélange à l'état fondu (bi vis, BUSS monovis) selon les techniques habituelles des thermoplastiques.

***Exemples***

Dans les exemples suivants, on désigne par :

PA 6: un polyamide 6 de MFI compris entre 17 et 20 (sous 235° C /2,16 kg)

PEBAX 1 : un copolymère à blocs PA-6 de $M_n$ 1 300 et blocs PTMG de $M_n$ 650 ayant une dureté shore D de 56 et une viscosité intrinsèque de 1,38 mesurée dans le méta crésol à 25 ° C pour une concentration initiale de 0,8 g/100 ml.

PEBAX 2 : un copolymère à blocs PA-6 de Mn 1 000 et blocs PTMG de Mn 1 000 ayant une dureté shore D de 45 et une viscosité intrinsèque de 1,40 (mesurée comme ci-dessus).

PEBAX 3: un copolymère à blocs PA-6 de Mn 2 600 et blocs PTMG de Mn 650 ayant une dureté shore D de 63 et une viscosité intrinsèque de 1,38 (mesurée comme ci-dessus).

VLDPE : un polymère de très basse densité 0,900 et MFI 0,8 (190° C - 2,16 kg).

Lotader 1: un copolymère éthylène / acrylate de butyle / anhydride maléique de composition en poids 90,9 / 6 / 3,1 et de MFI 5 (190° C - 2,16 kg).

Lotader 2: un copolymère éthylène / acrylate de butyle / anhydride maléique de composition en poids 79,2 / 17,7 / 3,1 et MFI 4,5 (190° C - 2,16 kg).

EXL 3611 : Un additif core-shell acrylique ayant à sa surface des groupes réactifs avec le PA6 et le PEBAX.

Lotader 3 : un copolymère éthylène acrylate d'éthyle / anhydride maléique de composition en poids 70,9 / 27,6 / 1,5 et MFI 7 (190° C/2,16 kg).

Lotader 4 : un copolymère éthylène / acrylate de méthyle / méthacrylate de glycidyle de composition en poids 64,2 / 28 / 7,8 ; et de MFI 6 (190° C / 2,16 kg).

$Sb_2O_3$ : de l'oxyde antimoine

anti 51 :

anti 82 :

SAYTEX 8010 :

XX1275: Mélange Maître de Diméthyl suifamine (DMS dans le Lotader 3)

***Exemple 1A :*** (comparatif)

Dans la trémie d'une extrudeuse double vis corotative Werner Pfleiderer de diamètre 40 mm, L/D = 40 (9 fourreaux + 4 entretoises soit une longueur totale de 10 fourreaux), on introduit par l'intermédiaire de trois doseurs pondéraux

indépendants (ou par simple pré mélange à sec des différents granulés) le Polyamide 6, le polyéthylène de très basse densité et le Lotader 1. Le débit total de l'extrudeuse est de 50 kg/heure et la vitesse de rotation vis de 150 tr/min. Les températures matière au niveau des fourreaux 4, 6, 8 et en tête sont respectivement de 260° C, 230° C, 235° C et 255° C. Les joncs extrudés sont granulés puis étuvés sous vide 8 heures à 80° C.

Les granulés obtenus sont ensuite injectés pour obtenir des barreaux de 80 x 10 x 4 mm sur lesquels est mesuré le module de flexion (Norme ISO 178) et la résistance aux chocs (Choc Charpy entaillé ISO 179/1A). Le module de flexion après conditionnement (14 jours / 23° C / 50 % HR) est de 750 MPa.

***Exemple 1B :*** (comparatif)

idem exemple 1A sauf que réalisé sur une extrudeuse double vis Werner Pfleiderer de diamètre 30 mm, L/D = 37 (12 fourreaux de 3D + 1 entretoise de 1D = 37 D). Le débit total de l'extrudeuse est de 15 kg/heure et la vitesse de rotation vis de 200 tr/min. La température matière en sortie d'extrudeuse est de 267° C.

***Exemple 2A :***

On procède tel que dans l'exemple 1A avec cependant les changements suivants ; une partie du PA6 et remplacée par du PEBAX 1, le Lotader 2 remplace le Lotader 1 et les températures matières sont respectivement de 250° C, 240° C, 245° C et 240° C.

***Exemple 2B:***

Idem exemple 1B mis à part le fait qu'une partie du PA6 est remplacée par du PEBAX 1. La température matière en sortie est de 264° C. Le module de flexion est de 210 MPa, contre 630 MPa pour l'exemple 1B. La transformation de ce produit (injection, extrusion) ne pose pas de problèmes particuliers (délaminage, etc.). Pour obtenir un module aussi bas tout en conservant une matrice PA6 avec un simple mélange PA6 + VLDPE + Lotader, il aurait fallu introduire au minimum 70 % en poids de (VLDPE + Lotader), ce qui est pratiquement impossible à réaliser.

***Exemple 3 :***

Idem exemple 2B sauf que la quantité de PEBAX 1 est de 40 % en poids contre 35 % en poids.

***Exemple 4 :***

Idem exemple 2A. Toutes conditions étant égales par ailleurs, on abaisse de 1 % les quantités de PEBAX 1, PA6 et VLDPE pour pouvoir introduire dans la composition 3 % en poids d'EXL 3611 (Additif core-shell acrylique possédant à sa surface des groupements réactifs vis à vis du PA6 et du PEBAX). L'introduction de cet additif permet d'accroître par réaction sur la matrice la viscosité de fusion à bas gradient de cisaillement. Le "melt-strength" s'en trouve amélioré et ceci permet d'obtenir une bonne tenue de paraison. L'aptitude à produire des corps creux par extrusion-soufflage s'en trouve amélioré.

***Exemple 5 :***

illustre la possibilité de réaliser des formules ignifuges sur la base de telles formulations PA6 + PEBAX + VLDPE + Lotader.

***Exemple 6 à 10 :***

On procède de la même manière que dans les exemples précédents 1 à 3, sauf que l'on modifie encore le ratio Polyamide 6 / PEBAX. La quantité et la nature du PEBAX permet d'ajuster à la demande le module de flexion de la composition. On utilise le LOTADER 2 et indifféremment les PEBAX 1, 2 ou 3.

***Exemple 11 et 12 :***

Exemples comparatifs pour la réalisation de formulations souples en associant uniquement PA6 et phase polyoléfinique réticulée (deux Lotader réagissant l'un avec l'autre). On procède comme dans les exemples 1A et 1B, sauf que la phase polyoléfine représente 50 % en poids de l'ensemble (exemple 11) ou 60 % en poids de l'ensemble (exemple 12).

- exemple 11 : 50 % PA6

  50 % d'un mélange en poids 75/22/3
  Lotader 3 / Lotader 4 / XX 1275

- exemple 12 : 40 % PA6

  60 % d'un mélange en poids 75 / 22/ 3
  Lotader 3 / Lotader 4 / XX 1275

Le catalyseur de réticulation (DMS) des fonctions anhydride maléique du Lotader 3 avec les fonctions epoxyde du Lotader 4 est introduit sous forme de granulés de mélange maître de DMS dans du Lotader 3.

Les quatre types de granulés (Lotader 3 + Lotader 4 + Mélange maître + PA6) sont introduits sous forme de dry-blend ou par quatre doseurs indépendants. Les modules de flexion sont respectivement de 400 MPa pour l'exemple 11 et 350 MPa pour l'exemple 12.

Les résultats sont reportés sur les tableaux 1 à 4 suivants.

Les échantillons de choc charpy, dureté traction et flexion ont été préalablement conditionnés 14 jours à 23° C et 50 % d'humidité relative (HR).

Les mesures de brillance (à 60°) ont été effectuées sur des plaques 100 x 100 $mm^2$ de 2 et 3 mm d'épaisseur.

Les mesures d'HDT (0,45 et 1,8 MPa) ont été effectuées sur des barreaux 120 x 10 x 4 $mm^3$ usinés dans des éprouvettes ISO R 527.

La courbe comparée de DMA (figure 1) entre les compositions des exemples 2A et 12 montre une plus faible décroissance du module E' pour la composition de l'invention 2A que pour la composition de l'exemple 12 qui ne comprend pas de polymère (B).

Tableau 1

| Exemple no | 1A | 1B | 2A | 2B | 3 | 4 | 5 | | 11 | 12 |
|---|---|---|---|---|---|---|---|---|---|---|
| PA6 | 60 | 60 | 25 | 25 | 20 | 24 | 21 | | 50 | 40 |
| PEBAX 1 | | | 35 | 35 | 40 | 34 | 29 | | | |
| VLDPE | 32 | 32 | 32 | 32 | 32 | 31 | 26 | Lotader 3<br>Lotader 4<br>réticulés | 50 | 60 |
| Lotader 1 | 8 | 8 | | 8 | 8 | | | | | |
| Lotader 2 | | | 8 | | | 8 | 7 | | | |
| EXL3611 | | | | | | 3 | | | | |
| Saytex 8010 | | | | | | | 13 | | | |
| Sb203 | | | | | | | 4 | | | |
| anti 51 | 0.5 | 0.5 | 1 | 0.5 | 0.5 | 1 | 1 | | | |
| anti 82 | 0.2 | 0.2 | 0.4 | 0.2 | 0.2 | 0.4 | 0.4 | | | |
| module de flexion ISO 178-93 (MPa) | 750 | 630 | 206 | 210 | 170 | 200 | | | 400 | 200 |
| choc charpy ISO 179-80 (Af) | | | | | | | | | | |
| (kJ/m²) 23 | NC | NC | NC | NC | NC | NC | | | NC | NC |
| - 20 | 32 | 29 | NC | NC | NC | NC | | | NC | NC |
| - 40 | 26 | 27 | 47 | 61 | 69 | 40 | | | 40 | NC |
| - 60 | | 22 | | 24 | 22 | | | | 17 | 56 |
| MFI 235° C, 2.16 kg | 1.2 | 1.7 | 4.3 | 4.7 | 4.7 | 2.5 | | | | |
| MFI 235° C, 5 kg | | | | | | | | | 2 | 1 |

Tableau 2

| Exemple no | 1A | 1B | 2A | 2B | 3 | 4 | 5 | | 11 | 12 |
|---|---|---|---|---|---|---|---|---|---|---|
| Melt-strength (215° C) | 1.6 | | 1.86 | | | 1.71 | | | | |
| t1 (50 cm) | | | 28.8 | | | 32.3 | | | | |
| t2 (25 cm) | | | 15.4 | | | 18.9 | | | | |
| Melt-strength (225° C) | | | 1.3 | | | 1.36 | | | | |
| t1 (50 cm) | | | 29.8 | | | 35 | | | | |
| t2 (25 cm) | | | 22.9 | | | 25.6 | | | | |

Tableau 3

| NORMES | ESSAIS | UNITE | Exemples | | | | |
|---|---|---|---|---|---|---|---|
| | | | 2A | 4 | 11 | 12 | 2B |
| ISO 1183<br>Méthode A | *DENSITE (23° C)* | | n = 5<br>1.019 s = 0.001 | n = 5<br>1.016 s = 0.002 | | | |
| ISO 75 Be<br>ISO 75 Ae | *HDT*<br>0.45 MPa<br>1.8 MPa | ° C<br>° C | n = 2*4<br>53.1 s = 0.5<br>42.2 s = 0.2 | n = 2*3<br>56.1 s = 1.5<br>39.9 s = 0.4 | n = 2*3<br>49.0 s = 1.1<br>37.3 s = 0.1 | | 53<br>42 |
| ISO<br>179 : 93<br>(Af) | *CHOC CHARPY*<br>23° C<br>- 20° C<br>- 40° C | KJ/m²<br>KJ/m²<br>KJ/m² | n = 6*10<br>NC<br>NC<br>19.5 Disp = 3 % | n = 6*10<br>NC<br>NC<br>25.7 Disp = 12 % | | | |
| ISO<br>179 : 80 Ae | 23° C<br>- 20° C<br>- 40° C | KJ/m²<br>KJ/m²<br>KJ/m² | NC<br>NC<br>47.1 Disp = 14 % | NC<br>NC<br>40 Disp = 16 % | | | |
| ISO<br>868 | *DURETE (23° C)*<br>Instantané<br>5 secondes<br>15 secondes | Shore D<br>Shore D<br>Shore D | n = 3*5<br>57.7<br>52.4<br>51.3 | n = 3*5<br>57.5<br>51.0<br>50.0 | -<br>56<br>55 | -<br>44<br>43 | -<br>52<br>- |
| ISO<br>R527 : 93-1B | *TRACTION (23° C)*<br>Contrainte à la rupture<br>Allongement à la rupture | MPa<br>MPa | n = 10<br>33.3 s = 0.5<br>382.1 s = 9.0 | n = 10<br>30.8 s = 1.1<br>384.2 s = 12.6 | 43 | 34 | |
| ISO<br>178 : 93 | *FLEXION (23° C)*<br>Module d'élasticité<br>Contrainte conventionnelle | MPa<br>MPa | n = 10<br>206 s = 4 | n = 10<br>196 s = 5<br>6.9 s = 0.1 | | | |
| | *BRILLANCE à 60°*<br>ép = 2 mm<br>ép = 3 mm | %<br>% | n = 2*5<br>82.6 s = 2.4<br>82.5 s = 1.3 | | n = 2*5<br>67.2 s = 1.3<br>52.3 s = 3.1 | | 83<br>83 |
| | Reprise humidité<br>23° C / 24 h | | 0,8 | 0,8 | 1,3 | 1,3 | 0,8 |
| | Gonflement huile<br>ASTM no 3<br>7 j / 100° C | | | | 5 | 10 | |

Tableau 4

| (*) | PEBAX 2 | PEBAX 1 | PEBAX 3 | Exemple no |
|---|---|---|---|---|
| **50/10/32/8** | 541 | 559 | 580 | 6 |
| **45/15/32/8** | 464 | 484 | 512 | 7 |
| **40/20/32/8** | 418 | 444 | 481 | 8 |
| **35/25/32/8** | 344 | 373 | 412 | 9 |
| **30/30/32/8** | 287 | 316 | 359 | 10 |

La première colonne indique les proportions massiques respectivement :
PA6/PEBAX/VLDPE/LOTADER 2

**Revendications**

**1.** Compositions comprenant :

- au moins un polyamide (A) ;
- au moins un polymère (B) comprenant des blocs polyamide et des blocs polyéther
- au moins une polyoléfine (C) ;
- au moins une polyoléfine fonctionnalisée (D)

et telles que la décroissance du module dynamique en traction en fonction de la température (DMA) est plus faible que celle de compositions ayant un module de flexion à température ambiante du même ordre de grandeur qui sont à base des polymères (A), (C) et (D) et ne comportent pas (B).

**2.** Compositions selon la revendication 1 et telles que leur module de flexion selon ISO 178-93 est 0,05 à 0,3 fois le module de flexion de (A) et est de préférence compris entre 150 et 750 MPa.

**3.** Compositions selon l'une quelconque des revendications précédentes dans lesquelles (A) est le PA-6 ou le PA-6,6.

**4.** Compositions selon l'une quelconque des revendications précédentes dans lesquelles (B) est un copolymère à blocs PA-6 et blocs PTMG.

**5.** Compositions selon l'une quelconque des revendications précédentes dans lesquelles (C) est choisie parmi le LLDPE, le VLDPE, le polypropylène, les copolymères éthylène / acétate de vinyle ou les copolymères éthylène / (méth)acrylate d'alkyle.

**6.** Compositions selon l'une quelconque des revendications précédentes dans lesquelles (D) est choisi parmi les copolymères éthylène / (méth)acrylate d'alkyle / anhydride maléique, les copolymères éthylène / acétate de vinyle / anhydride maléique ou les copolymères éthylène propylène majoritaires en propylène greffés par de l'anhydride maléique puis condensés avec du polyamide 6 monoaminé ou des oligomères mono aminés de caprolactame.

**7.** Compositions selon l'une des revendications précédentes dans lesquelles :
$50\ \% \leq A + B \leq 80\ \%$
$20\ \% \leq C + D \leq 50\ \%$
le total étant 100 % (en poids)

**8.** Compositions selon la revendication 7 dans lesquelles (en poids) :
$0{,}06 \leq A/B \leq 15$ et de préférence $0{,}5 \leq A/B \leq 12$

**9.** Compositions selon la revendication 7 ou 8 dans lesquelles en poids :
$0{,}1 \leq D/C \leq 0{,}5$

**10.** Compositions selon l'une quelconque des revendications 1 à 6 dans lesquelles :

$55\ \% \leq A + B \leq 65\ \%$
$35\ \% \leq C + D \leq 45\ \%$
le total étant 100 %
$0{,}5 \leq A/B \leq 5$
$0{,}2 \leq D/C \leq 0{,}3$

(A) étant le PA-6 ou le PA-6,6
(B) étant un copolymère à blocs PA-6 et blocs PTMG
(C) un VLDPE
(D) un copolymère éthylène / (méth)acrylate d'alkyle / anhydride maléique

**11.** Objets moulés extrudés ou soufflés tels que films, tubes, plaques ou pièces de forme diverses fabriqués à partir des compositions de l'une quelconque des revendications précédentes.

Fig. 1/1

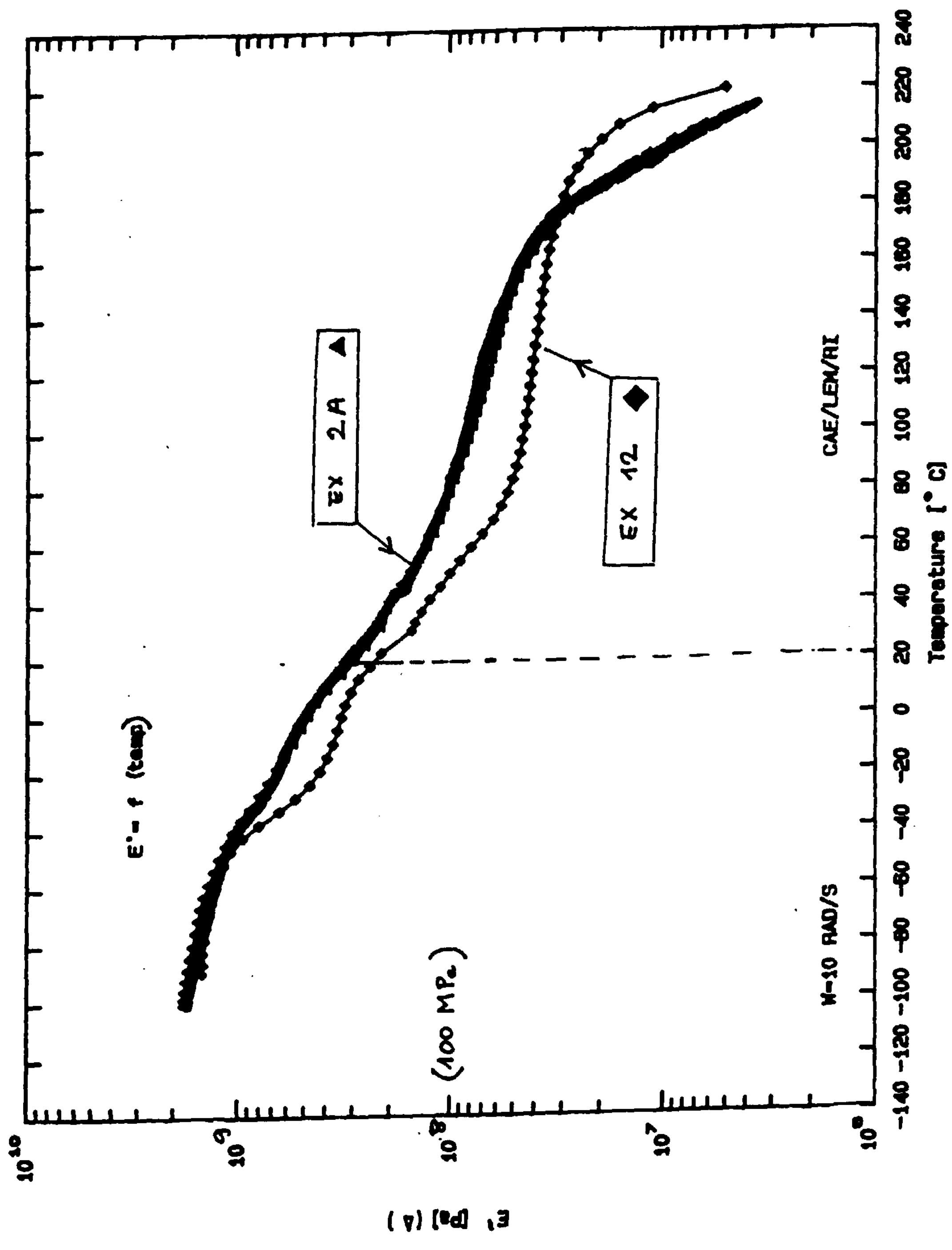
E' = f (temp)
EX 2A
EX 12
CAE/LEM/RI
W=10 RAD/S
(100 MPa)
Temperature [° C]
E' [Pa] (A)

Office européen des brevets

# RAPPORT DE RECHERCHE EUROPEENNE

Numero de la demande
EP 97 40 0085

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | EP 0 233 428 A (ATOCHEM) 26 Août 1987<br>* le document en entier *<br>--- | 1 | C08L77/00<br>C08L77/02<br>C08L77/06 |
| Y | US 5 416 171 A (CHUNG LIE-ZEN ET AL) 16 Mai 1995<br>* le document en entier *<br>--- | 1 | |
| D,Y | US 5 070 145 A (GUERDOUX LIONEL) 3 Décembre 1991<br>* le document en entier *<br>--- | 1 | |
| D,Y | EP 0 564 338 A (ATOCHEM ELF SA) 6 Octobre 1993<br>* le document en entier *<br>----- | 1 | |
| | | | DOMAINES TECHNIQUES RECHERCHES (Int.Cl.6) |
| | | | C08L |

Le présent rapport a été établi pour toutes les revendications

| Lieu de la recherche | Date d'achèvement de la recherche | Examinateur |
|---|---|---|
| LA HAYE | 26 Mai 1997 | Leroy, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)